Europäisches Patentamt

European Patent Office

Office européen des brevets

(11) Publication number: **0 068 801**
**B1**

## EUROPEAN PATENT SPECIFICATION

(45) Date of publication of patent specification: **10.09.86**

(51) Int. Cl.⁴: **B 41 M 5/24,** G 03 C 1/72, G 11 B 7/00

(21) Application number: **82303256.0**

(22) Date of filing: **22.06.82**

(54) Optical storage medium.

(30) Priority: **22.06.81 US 276283**

(43) Date of publication of application:
**05.01.83 Bulletin 83/01**

(45) Publication of the grant of the patent:
**10.09.86 Bulletin 86/37**

(84) Designated Contracting States:
**DE FR GB IT**

(56) References cited:
**DE-A-1 574 687**
**DE-A-2 558 529**
**FR-A-2 284 163**
**FR-A-2 367 273**
**FR-A-2 460 205**
**GB-A-2 007 860**
**GB-A-2 026 901**
**US-A-3 650 743**
**US-A-4 202 928**

(73) Proprietor: **International Business Machines Corporation**
**Old Orchard Road**
**Armonk, N.Y. 10504 (US)**

(72) Inventor: **Tu, King Ning**
**44 Whitlaw Close**
**Chappaqua New York 10514 (US)**
Inventor: **Ahn, Kie Yeung**
**639 Quaker Road**
**Chappaqua New York 10514 (US)**
Inventor: **Herd, Sigrid Renee**
**South Quakerhill Road**
**Pawling New York 12564 (US)**
Inventor: **Lee, Michael Heino**
**715 Seawood Way**
**San Jose California 95120 (US)**
Inventor: **Wieder, Harold**
**20175 Knollwood Drive**
**Saratogo California 95070 (US)**
Inventor: **Onton, Aare**
**14690 Aloha Avenue**
**Saratogo California 95070 (US)**

(74) Representative: **Ahlman, Bertel et al**
**IBM Svenska AB Box 962**
**S-18 109 Lidingö (SE)**

Courier Press, Leamington Spa, England.

**Description**

This invention relates to optical storage media.

In optical storage of data, use of lasers to record data optically has been employed in forming pits in a recording medium to change the reflectivity of the medium. Pits are formed by evaporation, melting, or ablation. Recording can be employed which uses changes of reflectivity or transmission of light to indicate data. Bell and Spong in "Anti-reflection Structures for Optical Recording" IEEE Journal of Quantum Electronics QE14, No. 7, 487495 (July 1978) describes on page 489 a monolayer structure of bismuth, titanium, or rhodium. A bi-layer anti-reflection structure can include Al or a dielectric stack of $TiO_2/MgF_2/TiO_2$. Organic dyes such as fluorescein have been used in such recording media. Another structure mentioned on page 493 of Bell and Spong is an Al reflector covered with a dielectric spacer and a Ti absorbing layer. Numerous optical recording variations have been proposed but they will not all be discussed here. The problem with the above alternatives is that they will not provide long-life storage of information without employing strong laser beams.

US 3,959,799 teaches read-only storage media consisting of adjacent thin layers of two or more materials which react, upon heating, to form a reaction prdouct different from those of the reactants. More specifically, a storage medium is described which comprises alternate aluminium and selenium layers which react to form a transparent product, $Al_2Se_3$, by locally heating the layers such as by the employment of a laser pulse.

U.S. Patent 4,069,487 suggests that a laser optical storage system can be used in which a metallic element (selected from Pt, Rh, Au, Ag, Pd, Ir, Cr, Mo, Ta, Zn, Cu, Al, In, Sn, Pb, and Bi Col. 8) can be layered with a non-metallic layer such as a chalcogen compound, inorganic oxide or resin (dye or pigment). The chalcogens include a chalcogen element such as S, Se and Te.

Widely publicised optical storage materials such as Te and Te-based alloys suffer from relatively short lifetimes primarily because of corrosion of these very thin films on the order of 100 atomic layers. An archival storage system is required to provide data integrity for a period of at least 10 years in an ordinary environment.

U.S. 4,000,492 shows thin metal films upon a transparent substrate with a first layer of Bi, In or Sn and a second layer closer to the laser source composed of $BiS_3$, $SbS_3$ and Se.

There have been known in the art optical recording media which result in the removal of material in regions approximating the diffraction-limited spot size of the recording laser. While high contrast between the written and unwritten areas has generally been achieved, the signal-to-noise ratio has been limited in some cases by edge effects around the periphery of the spots, which cause some scattering of the read beam. Additionally, these media, such as those based on Te and Te alloys, suffer from corrosion effects.

There have also been known a number of other optical recording media and other means of marking these media; however, the ones of these media which have achieved long-life recording of information have required higher laser power levels than is desirable, i.e., higher than that achieved with Te-based alloys.

An object of this invention is to provide an optical storage medium which provides extremely high densities of machine readable data.

Another object of this invention is to provide archival level storage of data with assurance of both clarity of the data and long-term retention of the data.

Another object of this invention is to provide an optical recording medium which is capable of storing information in response to a laser beam of acceptable power level and which will also have sufficient lifetime for archival storage purposes.

DE—A—2 558 529 discloses a multilayer recording material, at least one of the layers comprising a metal selected from the group consisting at least of Co, Pd, Au, Pt, Cr, Ta, Rh and Si. An energy beam is used for recording marks on the material.

US 4 241 356, FR 2 367 273 discloses another recording material comprising a substrate, a constrast layer and two metal layers.

The present invention is disclosed in the attached claims.

An advantage of the present invention is that a large optical contrast is provided between a marked area and an unreacted metallic film.

Another advantage of the invention is that less energy is required from the marking beam due to a used minor layer.

Still another advantage of the invention is that the wavelength of the marking beam is maximized by the use of a spacer layer.

The scope of the invention is defined by the appended claims; and how it can be carried into effect is hereinafter particularly described with reference to the accompanying drawings, in which:—

Figure 1 is a schematic drawing of one embodiment of optical storage medium;

Figure 2 is a similar drawing of another embodiment;

Figure 3 is a sectional schematic drawing of a multilayer optical storage medium according to this invention;

Figures 4 and 5 show differences in reflectivity between Pd and $Pd_2Si$ and a black reference;

Figure 6 is a schematic drawing of an arrangement by which reflectivity was measured;

Figure 7 shows percentage of reflectivity versus wavelength for two bi-layers in accordance with this invention;

Figure 8 shows glancing-incidence Seeman-Bohlin x-ray diffraction spectra of an Rh/Si film as a function of annealing time;

Figure 9 shows percentage of reflectivity versus wavelength for Rh/Si bi-layers;

Figure 10 shows reflectivity versus wavelength for Rh/Si before and after annealing;

Figure 11 shows percentage of reflectivity versus wavelength for Rh/Si bi-layers;

Figure 12 shows percent of reflectivity versus silicon thickness for an Rh/Si bi-layer;

Figure 13 is a TEM bright field photograph of a mark written by a laser on a Co/Si bi-layer;

Figure 14 is a photograph in the dark field mode of the same mark as in Fig. 13;

Figures 15 to 17 show TEM photographs of marks on Au/Si bi-layers of varying compositions;

Figure 18 shows reflectivity versus wavelength for a Si/Au bi-layer;

Figure 19 shows reflectivity versus wavelength curves for various Si/Pd bi-layers;

Figure 20 shows reflectivity percentage versus laser power for Te and Rh/Si bi-layers;

Figure 21 shows power versus pulse width as a function for various substrates carrying Te or Rh/Si bi-layers.

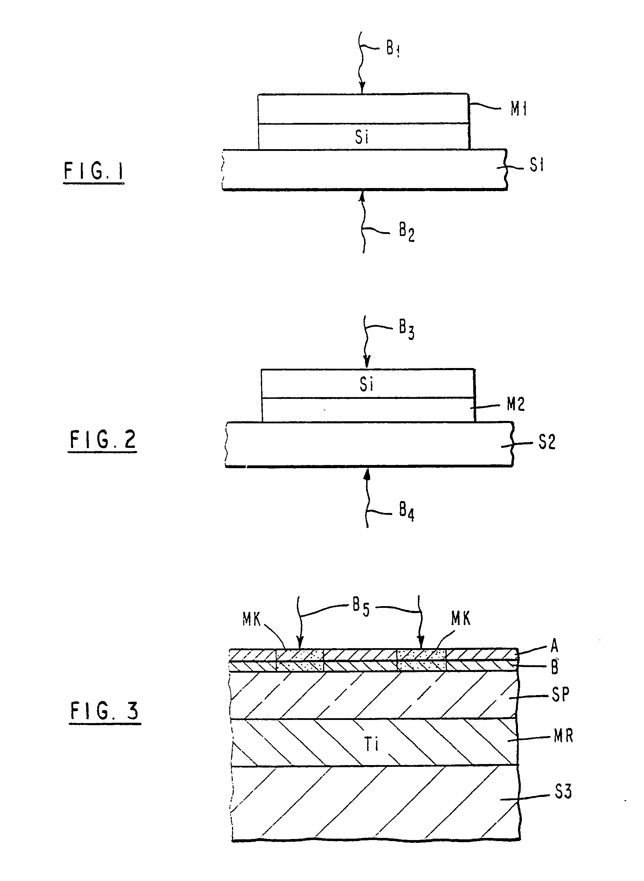

Figure 1 is a schematic representation of an optical storage medium. The medium comprises substrate S1 which can be transparent or opaque, depending upon the application for which the medium is to be employed. Upon the substrate is a layer in the form of a thin film of silicon (Si). Upon the silicon layer is another layer in the form of a thin film of a metal M1 which when heated sufficiently (by means such as laser beam B1) can combine with the silicon to provide a mark readable by a sensor, such as an optical sensor of the type employed in optical recording devices. The data recorded can be stored with such high density that visual inspection is possible only with optical magnification. In general, the metal film M1 upon the top of the silicon provides high reflectivity of light. About 65% and more of beam B1 is reflected. In general, high writing energy is required to heat the metal M1 sufficiently to form a mark because of the high level of reflectivity. In addition, the metal film M1 is exposed to ambient conditions which will tend to shorten the life of the medium because of oxidation due to humidity causing oxygen to react with the metal. Such oxidation will spoil the reflectivity of the metal thereby destroying the contrast in reflectivity required for storing data. However, if the substrate S1 is transparent, then the silicon can be exposed to the energy from a source, such as a laser beam B2, which strikes the silicon which has a low value of reflectivity less than or equal to about 5%. This leads to a low writing energy because little heating is required to raise the silicon to a high enough temperature to heat the interface between the metal M1 and the silicon to the temperature required to form a mark. In addition, in the case of exposure of the medium through the substrate, the metal M1 can be covered with a protective layer to inhibit degradation of the metal film.

The preferred metals M1 for use in the metal layer are rhodium, cobalt, palladium, platinum, chromium, tantalum and vanadium. In general, the group VB metals V, Nb and Ta are all useful in this connection. Group VIB, VIIB, VIII metals, Mg and Au are all applicable in particular among all other metals. Specifically, the group VIB metals are Cr, Mo, and W. The group VIIB metals are Mn, Tc, and Re. The group VIII metals are Fe, Co, Ni, Ru, Rh, Pd, Os, Ir and Pt. Au is, of nourse, the nearest nighoour of Pt on the periodic chart although it is a group IB metal.

Another embodiment (Fig. 2) is similar to that of Fig. 1 with substrate S2 being composed of any substrate material suitable for a recording medium. A metal layer M2 in the form of a thin film is deposited upon the substrate S2 first. Next, a thin film silicon layer is deposited upon the metal M2. In this case, it is preferred to write upon the upper surface of the medium with laser beam $B_3$ (or alternative radiation other than a laser beam) rather than with a beam $B_4$ passing through the substrate to heat the metal directly, as with beam $B_1$ in Fig. 1. Another advantage of the structure of Fig. 2 is that the silicon layer on the metal layer M2 provides a passivation layer, per se, requiring no additional film to protect the metal layer M2, because the substrate protects the lower surface.

According to the invention, a multi-layer optical storage medium (Fig. 3) has a substrate S3 which may be a recording disk for high density storage. The next layer is a reflective mirror layer MR, which may be of titanium or other metal which is highly reflective and which is sufficiently refractory. Ti has a melting point of 1668°C so that it is suitable for use without degradation. Upon mirror layer MR is deposited a dielectric spacer layer SP which is preferably composed of a material, such as $SiO_2$, which is of an appropriate thickness to maximize the wavelength of the laser beam $B_5$ which is directed upon a pair of thin films A and B which are respectively a metal layer and a silicon layer. The materials of films A and B are interchangeable, so that the metal may be on top as film A (as in Fig. 1) or below as film B (as in Fig. 2). In either case, the light which passes 'through the films A and B is reflected back to heat the upper films so as to increase the efficiency of the laser beam $B_5$, thereby requiring less energy from beam $B_5$ to write data at a given point. Again, the placement of the silicon as the upper film A should enhance the efficiency of the data recording function.

Films of silicide (a compound of metal and silicon) have been widely studied for their applications in micro-electronic devices as contact materials.

K. N. Tu and J. W. Mayer, chapter 10 in "Thin Films—Interdiffusion and Reactions" Ed. by J. M. Poate, K. N. Tu and J. W. Mayer, Wiley-Interscience, New York (1978).

In forming silicide contacts by reacting a deposited metallic film with Si, a large optical constrast between the silicide and the unreacted metallic film has often been observed. C. J. Kircher, Solid State Electron. 14,507 (1971).

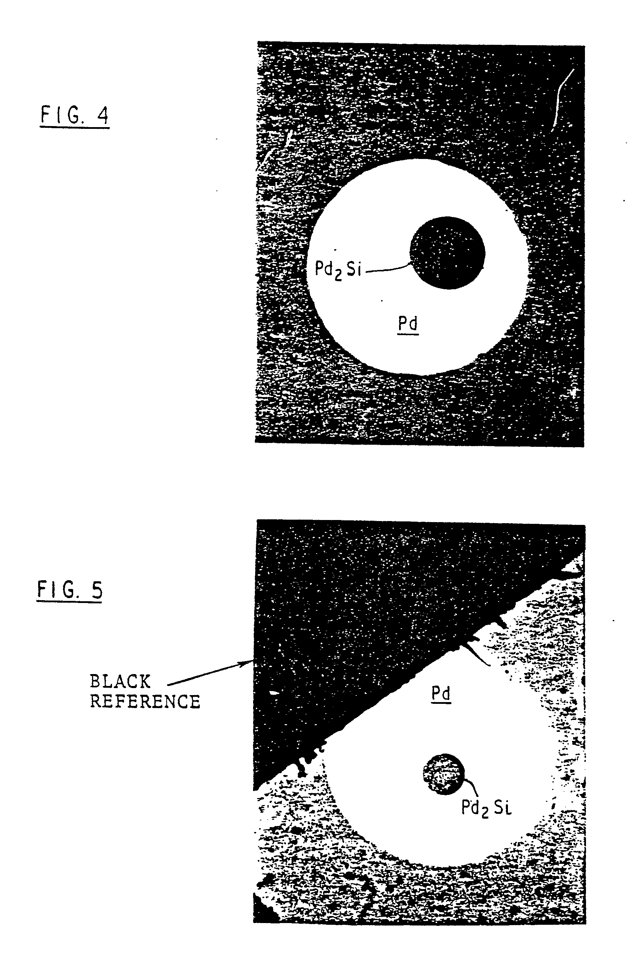

The present invention arises from a study of optical contrasts. For example, Fig. 4 shows the dark spot of a $Pd_2Si$ contact 0.025 mm in diameter in an etched hole on an oxidized Si wafer surrounded by a much brighter Pd area. Fig. 5 shows differences in reflectivity between these and a black reference. These suggested that silicide films could be considered as potential materials for archival optical storage, provided that the contrast between the silicide and the metal (or Si) in reflection is large enough for the application. Other crucial requirements for materials in archival optical storage are a long lifetime, over 10 years at room temperature and non-toxicity. Findings on reflectivity change and stability of silicide films for the storage application are discussed below.

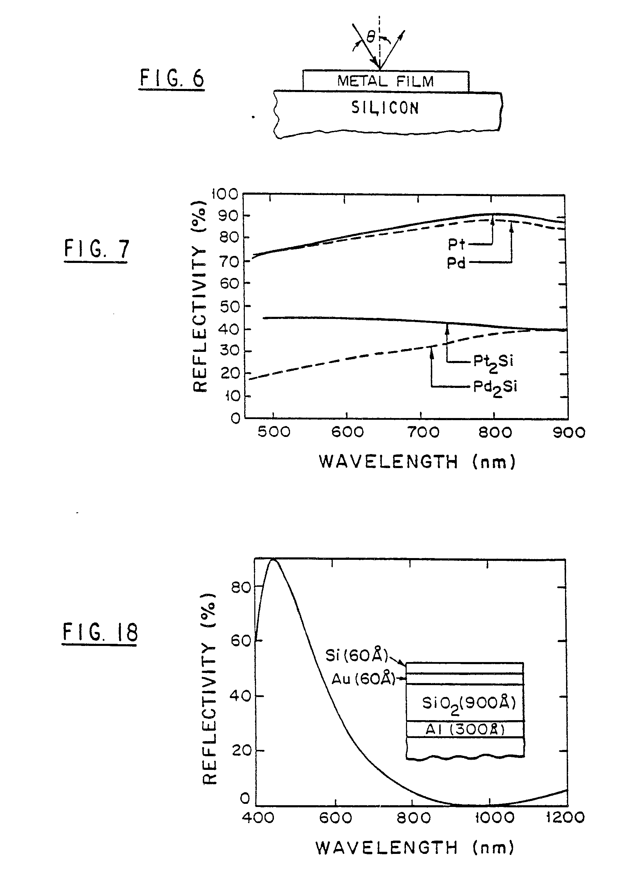

The difference in optical reflectivity between metallic films and their silicides formed on Si wavers was measured. Several transition metal films of thicknesses shown in Table I were prepared by E-beam deposition in a vacuum chamber of $13.33224 \times 10^{-6}$ Pa ($10^{-7}$ torr) onto [100] oriented Si wafers of about 32 mm in diameter, as shown in Fig. 6. Optical reflectivity ($R_o$) shown in Table I is the value measured at $\lambda = 643.7$ nm (Kr laser), with $\theta$ the angle of incidence of light upon the film being zero.

These films were then annealed at proper conditions to form silicides, and reflectivity values were measured again as shown in Table I. As can be seen, most pairs of a metal and its silicide show a difference in reflectivity $\Delta R$ greater than 30%. The largest difference observed is that between Pd and $Pd_2Si$, about 53%. The difference has been found to vary with the wavelength of light used, and Fig. 7 shows variations in optical reflectivity of films of Pd, Pt, $Pd$-$Pd_2Si$ and $Pt$-$PtSi$ pairs measured on Si wafers as a function of wavelength of light used. In the wavelength range shown in Fig. 7 $\Delta R$ between Pd and $Pd_2Si$ shows a larger change than that between Pt and PtSi.

TABLE I

Optical reflectivity of bulk silicides

| Metal* | Thickness (Å) | $R_o(\%)$ | Silicide | $R_1(\%)$ | $\Delta R(\%)$ |
|---|---|---|---|---|---|
| Pd | 2000 | 81 | $Pd_2Si$ | 28 | 53 |
| Pt | 1300 | 83 | PtSi | 44 | 39 |
| Ta | 2000 | 58.5 | $TaSi_2$ | 32.5 | 26 |
| Rh | 2000 | 67 | RhSi | 37 | 30 |
| V | 3000 | 48.5 | $VSi_2$ | 30 | 18.5 |
| Co | 500 | 68 | CoSi | 47 | 21 |

$\lambda = 643.7$ nm
*Metal films on Si wafer

Palladium and silicon and platinum and silicon

$Pd_2Si$ and PtSi are two compounds which have many desirable properties including stability and optical contrast. $Pd_2Si$ and PtSi are both formed when local spots are heated by a laser beam during recording. Fig. 1 shows a schematic drawing of a structure in which the readout is done by reflection. A substrate of Si or a thin film of Si is deposited onto a suitable substrate by means of vacuum deposition technique or CVD process. A thin layer of Pd or Pt film is then deposited onto the Si film, where the thickness of Pd and Pt may range from 20 nm to 60 nm (200Å to 600Å).

The percentage of optical reflectivity of these films ranges from 80% for Pd to 84% for Pt at a wavelength of interest, say 640 nm (6400Å). The spectra shown in Fig. 7 are for films of 100 nm (1000Å) thickness. Digital information is recorded by local heating of spots with pulsed laser beam by moving the storage film or by scanning the laser beam by moving the storage film or by scanning the laser beam over the stationary storage film. The temperature of the local spots may exceed several hundred degrees Celsius, and this causes the formation of compounds such as $Pd_2Si$ and PtSi by thermal diffusion or melting. The percentage of optical reflectivity of these compounds is very low, typically less than 40%. For example, at the wavelength of interest, at 640 nm (6400Å), the percent of reflectivity is 28% for $Pd_2Si$ and 44% for PtSi, as shown in Fig. 7 and Table I.

TABLE II
Published physical data

| Silicides | Formation Temp. °C | Activation energy of growth, eV | Growth rate | Melting point °C |
|---|---|---|---|---|
| $Pd_2Si$ | 100—700 | 1.3—1.5 | $t^{1/2}$ | 1330 |
| $Pt_2Si$ | 200—500 | 1.1—1.6 | $t^{1/2}$ | 1100 |

t=time

From P. 376, Thin Films—Interdiffussion and Reactions, Ed. by Poate, Tu, and Mayer, John Wiley & Sons (1978).

As to the lifetime of such devices, consider the diffusion of Pd into Si at room temperature. Taking 1.4 eV as the average activation energy, the diffusion distance in 10 years turns out to be 0.55 nm.

Although not shown in Fig. 1, a dielectric thin film in the thickness range of 100 nm (1000Å) may be deposited over the Pd surface as an anti-reflection coating which may also serve as a passivation layer, to enhance the corrosion resistance.

Rhodium—silicon

In an optical storage disk (Fig. 3) the active layers A and B may be Rh on Si or Si on Rh and can be deposited on a $SiO_2$ dielectric spacer layer SP. The thickness of each active layer, typically less than 15 nm, is chosen such that there is maximum contrast between the laser written spot and the unreacted background.

When a thin film of rhodium is in contact with a layer of silicon and heated to a temperature higher than 400°C, reaction takes place at the interface that forms RhSi. Below 377°C no reaction was observed to take place (D. J. Coe, E. H. Rhoderick, P. H. Gerzon, and A. W. Ginsley, "Silicide Formation in Rh-Si Schottky barrier diodes", Inst. of Phys. Conf. Ser. 22, p. 74, 1974), and this makes the Rh system more attractive for long-term storage applications.

The active layers A and B (Si+Rh or Rh+Si) are on a Ti mirror (40 to 50 nm thick) separated by an $SiO_2$ dielectric spacer (90 to 100 nm thick). Information is stored by local heating of spots with a laser beam where heating causes reaction of Rh and Si to form silicides. The difference in optical reflectivity before and after formation of silicide is sufficient to give an adequate contrast ratio for readback. For example, the reflectivity of a Rh film of 200 nm (2000Å) on Si at the wavelength of interest (643.7 nm) is typically 67%, and this reduces to 37% after formation of RhSi by annealing at 500°C for 60 minutes.

The main advantage of this is that it avoids the difficult process of ablating perfectly circular holes as used in conventional low-temperature storage materials such as Te and Te-based alloys.

The element Rh is known to be almost corrosion free, and other optical files fabricated with Rh film (with very high laser energy) are certified to be archival by the National Bureau of Standards in the United States of America. Rhodium offers resistance to atmospheric corrosion of the disk, thus providing a longer lifetime than metals which are more reactive.

Although a bi-layer structure is shown for the active layer in Fig. 3, any variation in the structure may be used, for example a trilayer structure of Si-Rh-Si can be employed to optimize the optical properties.

The lifetime of media is determined largely by degradation of the film caused by corrosion or interfacial diffusion.

Corrosion

With respect to corrosion, Pt/Si, Rh/Si and Pd/Si films (where the metal is deposited first and the silicon later) are much less easily corroded than conventional storage media such as Te.

Interfacial diffusion

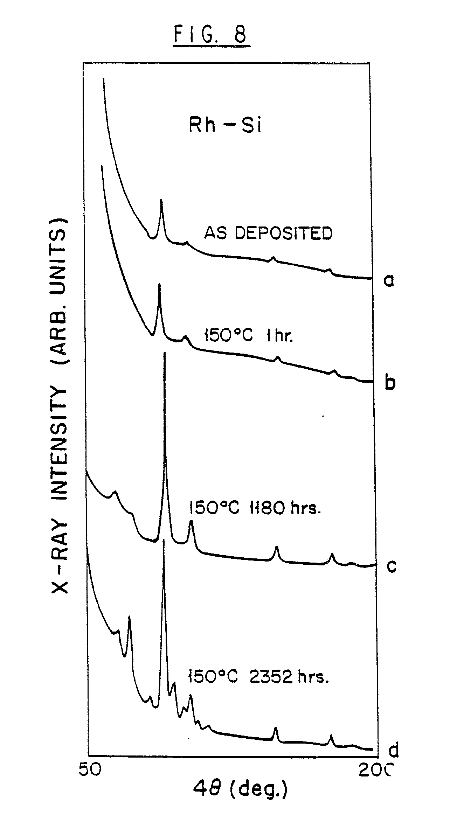

Room temperature lifetime of these bi-layer film structures has to be estimated by an accelerated test and by extrapolation using the known silicide growth rate in thicker films measured at higher temperatures. In the case of 200 nm Rh films on Si wafers, the growth of RhSi around 400°C was observed to be diffusion-controlled with an activation energy of 1.9 eV. See the following references. D. J. Coe, E. H. Rhoderick, D. H. Gerzon and A. W. Ginsely, in "Metal-Semiconductor Contacts", Conference Series No. 22, Institute of Physics, London 1974; S. Petersson, R. Anderson, J. Dempsey, W. Hammer, F. d'Heurle and S. Laplaca, J. Appl. Phys. 51,373 (1980). By extrapolating it to room temperature, a diffusion-like kinetic constant of $10^{-31}$ cm²/sec and an estimated growth of RhSi of 1 nm in a period of 10 years are expected, which practically means no growth of RhSi. However, to check experimentally if an under estimate had been made for the reaction rate in very thin films used here, an accelerated test was performed by annealing the Si/Rh bi-layer films at 150°C for periods of up to 98 days. Fig. 8 shows glancing-incidence Seeman-Bohlin x-ray diffraction spectra of a Si (25 nm)/Rh (25 nm) film as deposited, annealed at 150°C for 49 days and 98 days. The extra reflections in (d) belong to RhSi. The intensity of the reflections in (a) is less than those of (b) and (d) due to shorter counting time. Only after 98 days is some RhSi formation observed; about 30 nm of Rh has been transformed to RhSi estimated from the relative intensity change of Rh reflections before and after the annealing. If the reported 1.9 eV activation energy is used to estimate the growth of RhSi at 150°C after 98 days, a growth of about 1 nm of RhSi is obtained, which is quite close to the value measured. It is concluded that the bi-layer film structure of Si/Rh will be stable at room temperature over 10 years. However, the same measurement showed that the bi-layer structure of Si/Pt will be marginally stable though satisfactory and Si/Pd will transform to $Pd_2Si$ probably in less than 10 years at room temperature.

In summary, it has been demonstrated that bi-layer film structure of Si and transition metals are promising materials for archival optical storage. They show a largs reflectivity change before and after silicide formation and some of them, such as Si/Rh, have extremely good stability at room temperature. Furthermore, they are non-toxic.

Although the large $\Delta R$ observed is interesting, the thick films used experimentally are not suitable for optical storage application because they require relatively high laser power in writing.

Much thinner bi-layer thin films of Si/metal have been prepared by consecutive deposition on oxidized Si wafers, fused quartz, and photoresist coated quartz for reflectivity and stability measurements. The bi-layer configuration of Si/metal/substrate of Fig. 2 rather than metal/Si/substrate of Fig. 1 was selected because of lower reflectivity, lower writing energy, and better surface passivation by the Si. Three near-noble metals, Pd, Pt and Rh were chosen to form the bi-layers because their silicides are easier to form than those of refractory metals.

This will save power during laser writing, yet it is noted that there is a trade-off in lifetime if the silicide forms very easily. The thickness of either the Si or the metal in the bi-layer structure has been varied in order to investigate the effect of interfacial interference on reflectivity.

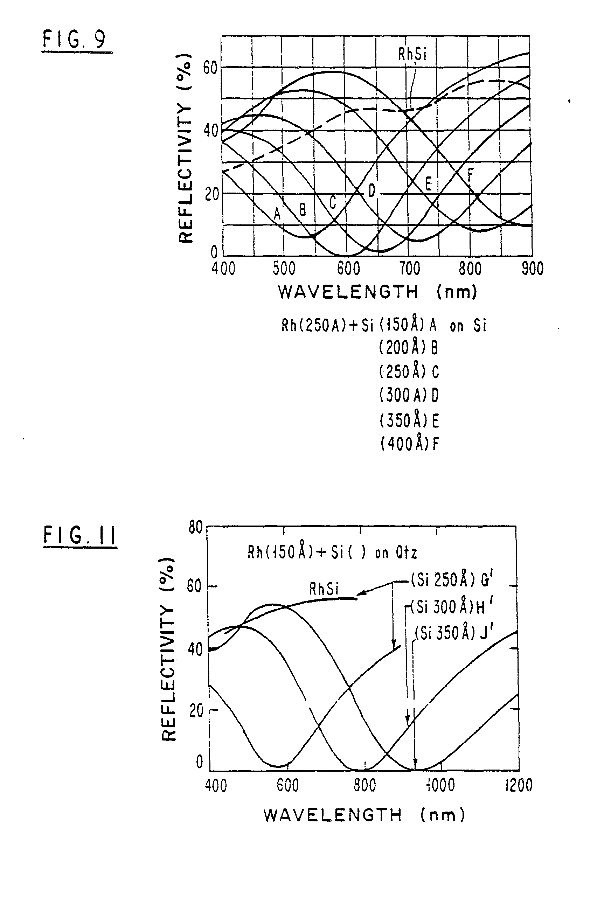

For example, Fig. 9 shows reflectivity-wavelength curves for six Si/Rh films on quartz with 25 nm Rh covered by 15, 20, 25, 30, 35 and 40 nm Si films. The reflectivity shows maxima and minima and they vary with film thickness. It is noted that these curves show a much stronger dependence of reflectivity on wavelength than those in Fig. 7. After annealing at 700°C for 30 minutes to form RhSi silicide, the reflectivity-wavelength curve for the annealed sample Si (25 nm)/Rh (25 nm) for example, is shown by the broken line in Fig. 9. Before annealing, the sample showed a reflectivity minimum at $\lambda \sim 6630$ nm. At this wavelength, which is desirable for writing, a $\Delta R$ of about 47% is observed.

Characterization of optical storage materials

Laser beam writing on Pt/Si and Rh/Si bi-layer films shows that thermal conductivities of substrates carrying the bi-layer films play an important role in determining power requirements for the write operation. With an argon laser (50% duty cycle), only 0.5—1.0 mw is needed to write 10 μm diameter spots with Rh/Si films on 400Å thick $Si_3N_4$ window structures; 10—20 mw is needed for films on glass substrates, and more than 35 mw is needed for films on higher thermal conductivity Si substrates. For comparison, 2—3 mw is typically necessary to write on Te films on glass substrates. Laser written spots on the Pt/Si and Rh/Si bi-layer films can also be described in terms of their apparent colours when viewed by back reflection of white light, or in terms of the local change in reflectivity for monochromatic light, e.g., argon laser illumination λ=514 . nNm found that blue, red, and yellow spots written on Rh/Si bi-layers, had reflectivity changes of <5% (blue) −37% (red) and +68% (yellow), in comparison with adjacent unwritten areas. Transmission electron microscopy and diffraction were used to determine the structural modifications responsible for the various colour and reflectivity changes. For Rh/Si films on thin $Si_3N_4$ windows, blue areas were associated simply with grain growth of the metallic Rh. More intense laser illumination produced red areas, associated with solid state reaction of the Rh and Si films and formation of a fine grain silicide of undetermined structure and composition. Still higher laser powers produced yellow areas, with larger crystals of orthorhombic $Rh_5Si_3$ and of an unidentified cubic phase (a=4.72Å).

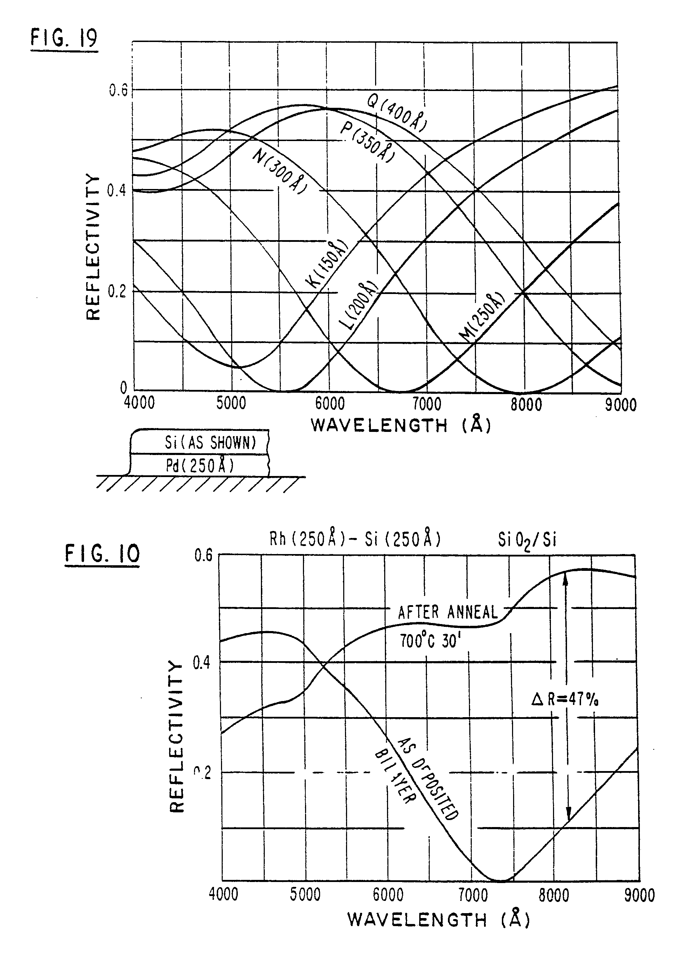

Fig. 9 shows the reflectivity of a bi-layer of Fig. 2 for indicated thicknesses of Rh and Si. Note that for a wavelength of 600 nm of light from a laser beam or the like the reflectance of Curve B is zero. Note the contrast with the RhSi compound curve shown in dotted form. Curve C is for 250Å each of Rh and Si and it has a minimum slightly above zero at about 660 nm. The curve in Fig. 10 shows slightly different results for Rh nominally 250Å and Si 250Å after annealing at 700°C for 30 minutes. At the preferred frequency (of a gallium arsenide laser) the difference in reflectivity is 47%. Just above 7000Å the difference in reflectivity is very large in percentage terms, nearly infinite according to the data shown.

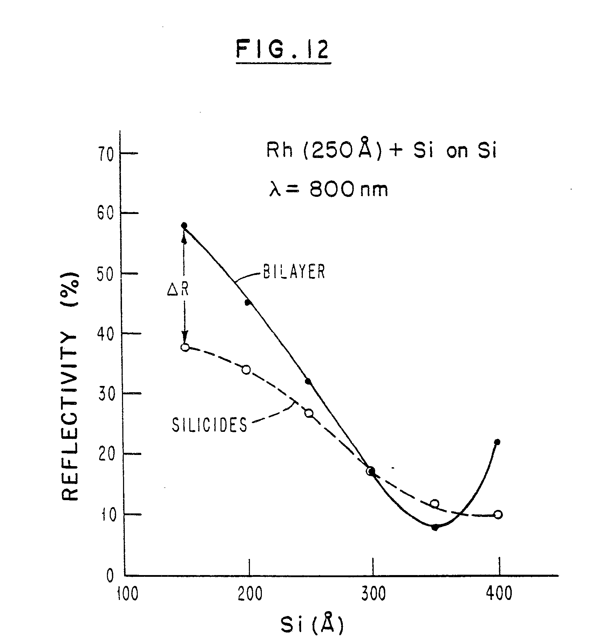

Fig. 11 shows the curves of reflectivity percent as a function of wavelength for a thinner 150Å thick film of Rh. Thicknesses G, H and J of Si are comparable to those for curves C, D and E in Fig. 9, and it can be seen that the minimum of zero at about 780 nm of curve H differs very substantially from the result shown for curve D in Fig. 9. The percentage contrast is much greater also at 810 nm. It can be seen that at 600 nm a red laser can be used with curve B in Fig. 9 and curve G in Fig. 11 to achieve extremely large ratios of reflectivity. Thus optimization will be enhanced by employing curves of this type for the material used for recording.

Fig. 12 shows the percentages of reflectivity as a function of Si thickness for the bi-layer of Fig. 2 and the silicide of rhodium in the dotted line curve. For these thicknesses, it can be seen that the maximum difference in reflectivity is provided at 150Å, for an 800 nm laser beam. These thicknesses correspond to those for curve A in Fig. 9, but no such data is shown in Fig. 11.

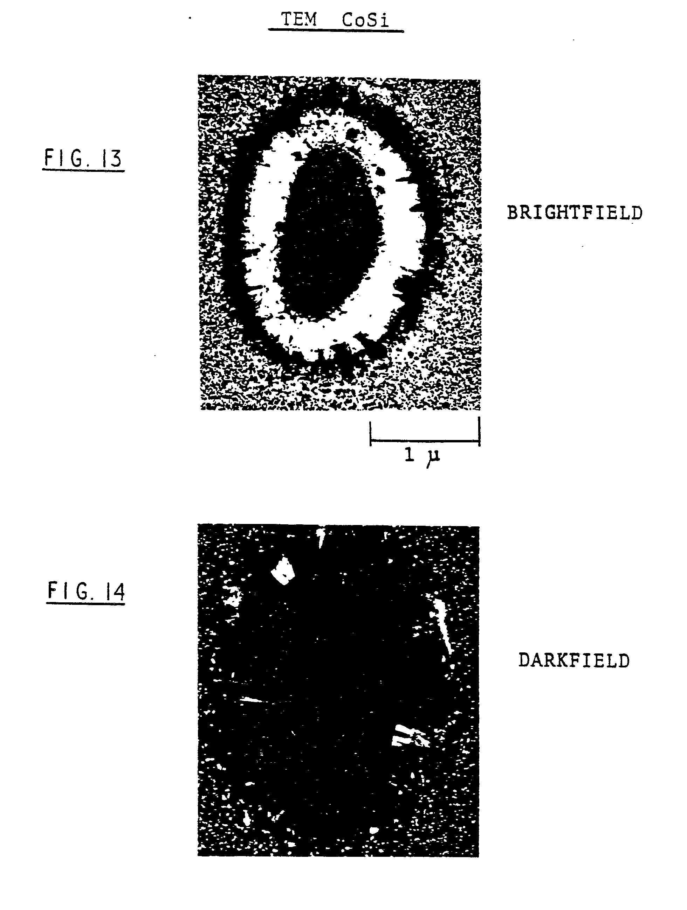

Fig. 13 is of a photograph magnified 30k times of a bright field transmission electron micrograph (TEM) of a mark made by a 5600 Angstrom wavelength laser beam on a cobalt/silicon bi-layer as in Fig. 2.

Fig. 14 is of a photograph also magnified 30k times of the same mark in the dark field mode. In the centre (dark in Fig. 13) is a thinner layer of amorphous $Co_xSi_y$ which has been heated more by the laser beam than the surrounding area. The next oval ring (lighter in Fig. 12) is composed of $Co_xSi_y$ amorphous material which is thicker. The dark ring about the light ring in Fig. 12 is composed of crystalline CoSi compound material. The surrounding grey area is the bi-layer of Co/Si which is in its unexposed state. The optical constrast of the inner oval with the surrounding area is quite sharp as can be seen.

Rhodium forms similar patterns with two amorphous $Rh_xSi_y$ inner portions. The thinned amorphous centre surrounded by a thicker rim is caused by writing with a level of laser power exceeding the optimum value. This pattern indicates the beginning of formation of a hole in the amorphous centre, where material has been driven away towards the rim. Slightly lower levels of power of the laser beam does not lead to a thickened rim around the amorphous centre.

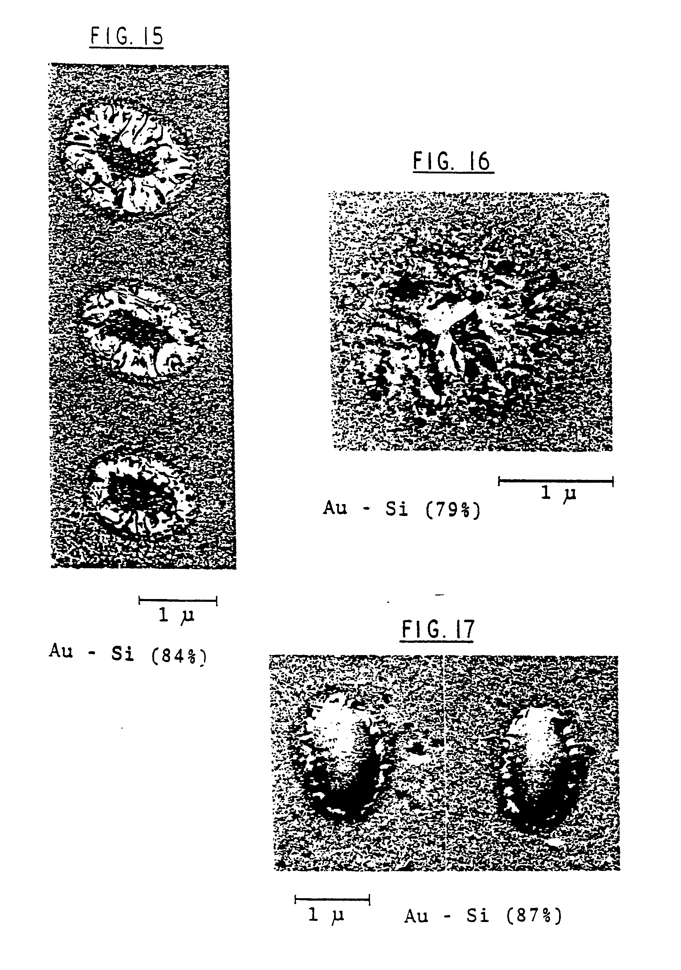

Fig. 15 is of a TEM magnified 20k times which shows three marks made by the same laser on a bi-layer of Au/Si in accordance with Fig. 2 where the ratio of Au to Si is 84 atomic percent in the Au/Si Bi-layer according to a microprobe analysis. The centre of the mark is black where the amorphous material is located. Around the amorphous material is a ring of crystalline material.

In the TEM photograph magnified 30k times of Fig. 16, the bi-layer is 79 atomic percent silicon and 21 atomic percent gold. The same laser beam applied to this gold rich material produced a crystalline mark which has poor characteristics for an optical record because of the low contrast between the mark and its surroundings. Fig. 17 is a TEM magnified 20k times of a set of marks made in a medium rich in silicon with 87 atomic percent Si and 13 atomic percent Au. In this case the centre has been transformed to the amorphous $Au_xSi_y$ material with the formation of a bubble of material lifted slightly off the substrate as can be seen by the curvature shading at the lower portion of the photographs of the TEMs. At the periphery is the crystalline Au Si compound and then the surrounding material is shown. Application of a greater period or intensity of laser radiation would cause the central bubble of amorphous material either to thin out or to collapse so that the contrast would be better, similarly to the marks in Fig. 15.

For optical reflectivity it does not matter whether the mixed bi-layer in the mark is amorphous or crystalline.

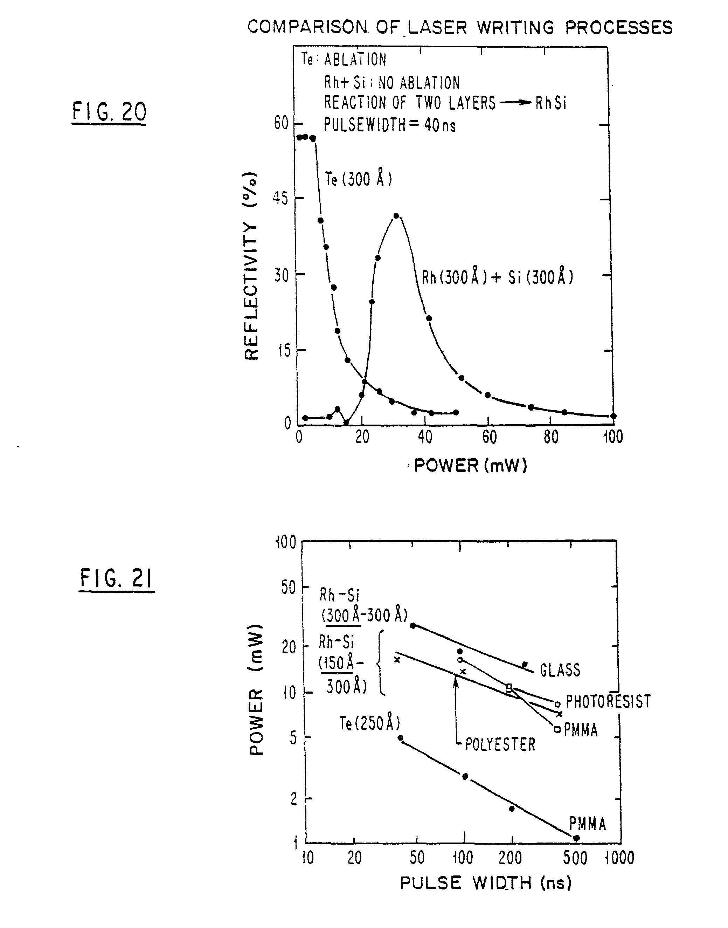

The percentage of optical reflectivity of an Si Au bilayer on an $SiO_2$ spacer layer on an Al mirror layer on a substrate is shown in Fig. 18 for various wavelengths.

Fig. 19 shows a Pd/Si chart of reflectivity fraction as a function of wavelength for a 250Å base of Pd coated with six different thicknesses of Si. For the 8100Å GaAs laser, curve N with 300Å thickness of Si will provide the greatest contrast, as can be seen. Curves L and M have similar minima for lasers in the 5500Å and 6700Å ranges.

Fig. 20 shows a comparison of laser writing with tellurium (Te) and a Fig. 14 shows a comparison of laser writing with tellurium (Te) and a Rh/Si bi-layer as a function of power. A power level below 30 mw of a 6741Å wavelength laser is required to make a mark on Te. The curve drops rapidly to below 10% reflectivity at 20 mw power. For rhodium/silicon bi-layers of 300Å each, the reflectivity of the bi-layer is low up to about 20 mw of power and peaks at about 37 mw of power reading about 45%. What happens with a Te coated medium is that the laser begins to open holes in the Te immediately. With the bi-layer, the first portion of the curve involves the reflectivity change as Rh and Si mix, and as the reflectivity curve for Rh/Si declines above 40 mw of power, holes open in the Rh/Si bi-layer. In addition, with Te there is ablation whereas with the bi-layer of Rh/Si there is no ablation below 30 mw, but there is instead a reaction of the two layers, at least until the power level is raised high enough to form holes in the material.

Table III shows the writing power required to produce a mark with various media most of which are thin film bi-layers in accordance with this invention. Comparison with tellurium is made in the last two entries. Palladium covered with silicon requires only a short pulse as do Si/Pd and Rh/Si with the power required being less for Pd/Si, increasing for Rh/Si and greatest for Si/Pd because of the reflectivity of the metal Pd being so much higher than Si in the other two cases. With Mo/Si, the power required to form silicides is only 35 mw with a longer pulse of 500 ns. For Zr/Si, the power is the same but the pulse length increases to 800 ns and for Nb/Si, the power is less at 30 mw but the time of the pulse required is greater at 1000 ns. For Si/Co and Co/Si the power levels required are low, but the length of the pulse is 1000 ns, which makes the writing speed slow. Au/Ge and Te are included in the table for the purpose of comparison. The power required to open a hole is higher and the pulse length is long.

# 0 068 801

TABLE III

Comparison of writing power bilayer structure on glass substrates

| Mat | R(%) | Thick (Å) | Power (mw) | Pulse (ns) |
|---|---|---|---|---|
| Pd-Si | 54 | 250—500 | 13*→64** | 100 |
| Si-Pd | 72 | 250—500 | 70→77 | 100 |
| Rh-Si | 7 | 300—300 | 28→61 | 100 |
| Si-Co | 68 | 300—300 | 27→68 | 1000 |
| Co-Si | 32 | 300—300 | 20→52 | 1000 |
| V-Si | 11 | 300—200 | 30 | 1000 |
| Mo-Si | 10 | 300—200 | 35 | 500 |
| Zr-Si | 15 | 300—200 | 35 | 800 |
| Nb-Si | 13 | 300—200 | 30 | 1000 |
| Au-Ge | 81 | 500 | 82 | 1000 |
| Te | 64 | 500 | 16 | 50 |
| Te | 64 | 500 | 10 | 100 |

*Power required to form silicides.
**Power required to open holes.
Wavelength: 647.1 nm.

In summary, Rh/Si provides a high data rate of only 100 ns pulse length. While Te is superior on this basis, requiring lower power or shorter pulses, it loses in comparison of lifetime. In terms of lifetimes, the life of Rh is extremely long, Pt is long, Pd less long, and Te extremely short.

Fig. 20 shows the curves of power required to write on various materials on different substrates. Except for the Te on PMMA curve, the rest of the curves are Rh/Si in thicknesses of 300Å/300Å and 150Å/300Å. It can be seen that polyester and PMMA appear to require less energy. The glass suffers in this comparison from the fact that the thickness of the Rh was greater.

Clearly, Te requires less power to provide a mark for a given pulse width, and is far more easy to mark than Rh/Si 150Å/300Å on the PMMA substrate. Also, as is obvious, less power is required as the pulse width increases. The slope of the curve seems to be greater for PMMA. For a short pulse width of less than 50 ns, the polyester requires a lower power.

Laser written spots in metal/silicon bilayer with a thickness varying from 300 to 500Å

Single pulse laser writing on Pd/Si, Co/Si and V/Si bi-layer films with a thickness varying from 300 to 500Å, showed that films on AZ resist on glass can be written with 0.88 w whereas on glass no effect was observed with less than 1.2 w. The $N_2$ pumped dye laser had a single pulse width of 5 ns and was focused to a spot size of about 1 µm. Scanning microscopy showed that although at >2.5 w holes were blown in the film, intermediate to no effect at <0.8 w the film shows shallow mounds in the centre of the spot with one or more concentric grooves towards the edge.

In the cases of Pd/Si and Co/Si, the centre was found to be amorphous but not so in V/Si. All the spots showed silicide formation. No major difference was found in the size of spots with 2 or 10 consecutive pulses into the same area. These results have demonstrated the writing ability of laser on silicide forming films.

8

**0 068 801**

TABLE IV
Silicide formation by contact reaction

| Elements | | Silicides | |
|---|---|---|---|
| | Metal-rich silicidies | Mono silicides | Disilicides |
| Pt, Pd | Pt$_2$Si 1.3—1.5 eV* | PtSi (end phase) 1.6 eV* | |
| Mg | Mg$_2$Si (only phase) | | |
| Ni, Co | Ni$_2$Si 1.5 eV | NiSi | NiSi$_2$ (end phase) |
| Ti, Zr, Hf Fe, Rh, Mn | | HfSi     RhSi 2.5 eV* 1.9 eV* | HfSi$_2$ |
| V, Nb, Ta Cr, Mo, W | | | VSi$_2$ 2.9 eV* |

*Activation energy

Silicide formation is quite systematic. It always starts with metal rich silicides and progresses towards the silicon rich silicides. Near noble metal silicides are easier to form, i.e., form at low temperatures, than silicides of refractory metals. For specific transition metals, Table IV shows the sequence of formation. The lower the activation energy shown, the easier it is to form the silicide.

**Claims**

1. An optical storage medium including first and second adjacent layers (A, B) which, upon marking with an energy beam form a marked area having optical properties different from the optical properties of the unmarked area, said first layer comprising a metal selected from the group consisting of Co, Pd, Au, Pt, Cr, Ta, V and Rh and said second layer comprising Si, characterized in that said marked area is composed of an amorphous central portion composed of Si and said metal selected from said group, that a dielectric spacer layer (SP) is provided as a third layer and a mirror layer (MR) is provided as a fourth layer.

2. A medium according to claim 1 wherein said central portion of the marked area is surrounded with crystalline material formed of Si and said metal selected from said group.

**Patentansprüche**

1. Optisches Speichermittel mit einer ersten und einer zweiten benachbarten Schicht (A, B), welche, nachdem sie mit einem Energiestrahl markiert wurden, eine Zone bilden, deren optische Eigenschaften sich von den optischen Eigenschaften der nicht markierten Zone unterscheiden, wobei die genannte erste Schicht ein Metall umfasst, das aus der Gruppe gewählt wurde, zu der Co, Pd, Au, Pt, Cr, Ta, V und Rh gehören und die genannte zweite Schicht Si enthält, dadurch gekennzeichnet, dass die genannte markierte Zone aus einem amorphen Mittelstück aus Si und dem genannten, aus der genannten Gruppe gewählten Metall besteht, dass eine dielektrische Distanzschicht (SP) als dritte Schicht und eine Spiegelschicht (MR) als vierte Schicht vorgesehen sind.

2. Mittel nach Anspruch 1, bei dem das genannte Mittelstück der markierten Zone mit kristallinem, aus Si bestehendem Werkstoff umrandet ist und das genannte Metall aus der genannten Gruppe ausgewählt wird.

**Revendications**

1. Un milieu d'emmagasinage optique comprenant des première et deuxième couches adjacentes (A, B) qui lors du marquage avec un faisceau d'énergie, forment une zone marquée ayant des propriétés optiques différentes des propriétés optiques de la zone non marquée, ladite première couche comprenant un métal choisi dans le groupe comprenant Co, Pd, Au, Pt, Cr, Ta, V et Rh et ladite deuxième couche comprenant du Si, caractérisé en ce que ladite zone marquée est composée d'une partie centrale amorphe composée de Si et dudit métal choisi dans ledit groupe, et en ce qu'une couche d'espacement diélectrique

9

(SP) est prévue comme troisième couche et en ce qu'une couche miroir (MR) est prévue comme quatrième couche.

2. Un milieu selon la revendication 1 dans lequel ladite partie centrale de la zone marquée est entourée avec du matériau cristallin formé de Si et dudit métal choisi dans ledit groupe.

FIG. 1

FIG. 2

FIG. 3

FIG. 4

FIG. 5

BLACK
REFERENCE

FIG. 6

θ

METAL FILM

SILICON

FIG. 7

FIG. 18

## FIG. 8

<u>F I G. 9</u>

Rh(250Å)+Si (150Å) A on Si
(200Å) B
(250Å) C
(300A) D
(350Å) E
(400Å) F

<u>F I G. 11</u>

## FIG. 19

REFLECTIVITY vs WAVELENGTH (Å)

Q(400Å), P(350Å), N(300Å), K(150Å), L(200Å), M(250Å)

Si (AS SHOWN)
Pd (250Å)

## FIG. 10

Rh(250Å) – Si(250Å)    SiO$_2$/Si

AFTER ANNEAL 700°C 30'

ΔR = 47%

AS DEPOSITED BILAYER

REFLECTIVITY vs WAVELENGTH (Å)

## FIG. 12

Rh (250 Å) + Si on Si
λ = 800 nm

0 068 801

TEM  CoSi

FIG. 13

BRIGHTFIELD

1 μ

FIG. 14

DARKFIELD

8

FIG. 15

1 μ

Au - Si (84%)

FIG. 16

Au - Si (79%)

1 μ

FIG. 17

1 μ     Au - Si (87%)

9

COMPARISON OF LASER WRITING PROCESSES

FIG. 20

Te: ABLATION
Rh+Si: NO ABLATION
REACTION OF TWO LAYERS ⟶ RhSi
PULSEWIDTH = 40 ns

Te (300 Å)

Rh (300 Å) + Si (300 Å)

REFLECTIVITY (%)

POWER (mW)

FIG. 21

Rh-Si
(300 Å-300 Å)

Rh-Si
(150 Å-
300 Å)

GLASS

PHOTORESIST

PMMA

POLYESTER

Te (250 Å)

PMMA

POWER (mW)

PULSE WIDTH (ns)

10